Europäisches Patentamt

European Patent Office

Office européen des brevets

(19)

(11) Publication number: **0 042 046**
**B1**

(12) **EUROPEAN PATENT SPECIFICATION**

(45) Date of publication of patent specification: **18.07.84**

(51) Int. Cl.³: **H 02 K  15/02,  B 21 D  28/10**

(21) Application number: **81102647.5**

(22) Date of filing: **08.04.81**

(54) Method of, and apparatus for, manufacturing laminated dynamoelectric machine structures.

(30) Priority: **16.06.80 US 159701**

(43) Date of publication of application:
**23.12.81 Bulletin 81/51**

(45) Publication of the grant of the patent:
**18.07.84 Bulletin 84/29**

(84) Designated Contracting States:
**DE FR GB**

(56) References cited:
**EP - A - 0 015 244
DD - A - 37 215
DE - A - 2 632 382
FR - A - 1 340 213
FR - A - 2 164 480
FR - A - 2 164 507
FR - A - 2 269 814
GB - A -  830 245
US - A - 2 975 312
US - A - 3 228 105
US - A - 3 323 338
US - A - 3 460 415
US - A - 3 597 835
US - A - 3 823 460
US - A - 4 110 895**

(73) Proprietor: **International Business Machines
Corporation
Old Orchard Road
Armonk, N.Y. 10504 (US)**

(72) Inventor: **Wustrau, Rolf
4300 Burney Drive
Austin Texas 78731 (US)**

(74) Representative: **Combeau, Jacques
Compagnie IBM France Département de Propriété
Industrielle
F-06610 La Gaude (FR)**

## Description

### Background of the invention
### Field of the invention

This invention relates to a method of and an apparatus for manufacturing laminated dynamoelectric machine structures from interlockable laminae with apparatus including at least one forming station where interlocking means are formed in prospective laminae on a sheet stock and one stacking station where the successive laminae are stacked.

### Description of the prior art

In the art of making laminated assemblies for electric motors, it is known to provide correspondingly dimensioned apertures and projections in individual laminae so that an interlocking stack of laminae may be formed. U.S. patent 4,110,895 discloses such a laminated manufacture. In addition, U.S. patent 4,110,895 patent teaches indexing each lamina prior to placing it in the stack of laminae. Such a practice is advantageous in minimizing the effects of any nonuniformity in the sheet metal stock from which the laminae are punched. A drawback of the disclosed practice, however, is that the stacking of the successive laminae is achieved in the same step and by the same punch as the blanking out of the lamina from the stock material. This requires the application of a high pressure on the stack which may result in damage to the laminae and mechanical irregularity in the stack. U.S. Patent 3,202,851 discloses a progressive die for forming and stacking interlockable laminae and includes a reference to art teaching rotation of rotor portions to achieve skew in the stack of laminations.

For a better understanding of the invention it is also worth mentioning other documents, not concerned with the manufacture of electric motors, but showing techniques known in the art of punching generally. US—A—3,323,338 and FR—2,164,507 show a technique for punching an element from, and returning it, to a stock sheet for transportation to other sites for further treatment, including for stacking purposes.

### Summary of the invention

According to the invention, which is defined in the characterising portions of Claims 1 and 3, each lamina is punched to provide, in addition to other features, nipples and correspondingly sized openings. A lamina punched from sheet stock at a blanking station is brought back into the stock. The stock is advanced to a working station having an alignment arbor and a clinching punch. The lamina is dislodged from the stock, forced onto the alignment arbor and compressed against laminae already on the arbor. The arbor is rotated for each lamina forced thereon to align the nipples and openings of adjacent laminae. A lamina support at the bottom of the arbor is lowered for each lamina forced onto the arbor.

In this way a uniform, laminated stator structure is provided. Uniformity is present because the metalurgical irregularities in the sheet stock are uniformly dispersed in the stator structure as a result of the rotation. Any mechanical irregularities in planarity are likewise uniformly distributed throughout the stator structure. This results in better electromagnetic qualities in the stator structure and, therefore, better quality in the stepper motor using a stator assembled in accordance with this invention.

A further advantage of this invention resides in the technique for interlocking laminae by a simple press fit. The stack is adequately held together for transport to any subsequent operations. The simple press fit of nipples into holes is thus more cost efficient than some methods in the prior art which required sufficient pressure to cause actual metal flow. As is recognized in the prior art, any technique which eliminates a need for rivets or separate clamping means is an improvement so that my simple press fit holds the stator structure in uniform alignment and no other clamping means are needed during subsequent operations such as wire wrapping or the like.

Other features and advantages of the present invention will become apparent from the following description taken in connection with the accompanying drawing wherein:

### Brief description of the drawings

Fig. 1 is a partial view of apparatus embodying the instant invention.

Fig. 2 shows a laminated stator constructed in accordance with the present invention.

Fig. 3 is an enlarged vertical section of a portion of the stator of Fig. 2 showing means for interlocking laminae in a stack.

### Description of a preferred embodiment

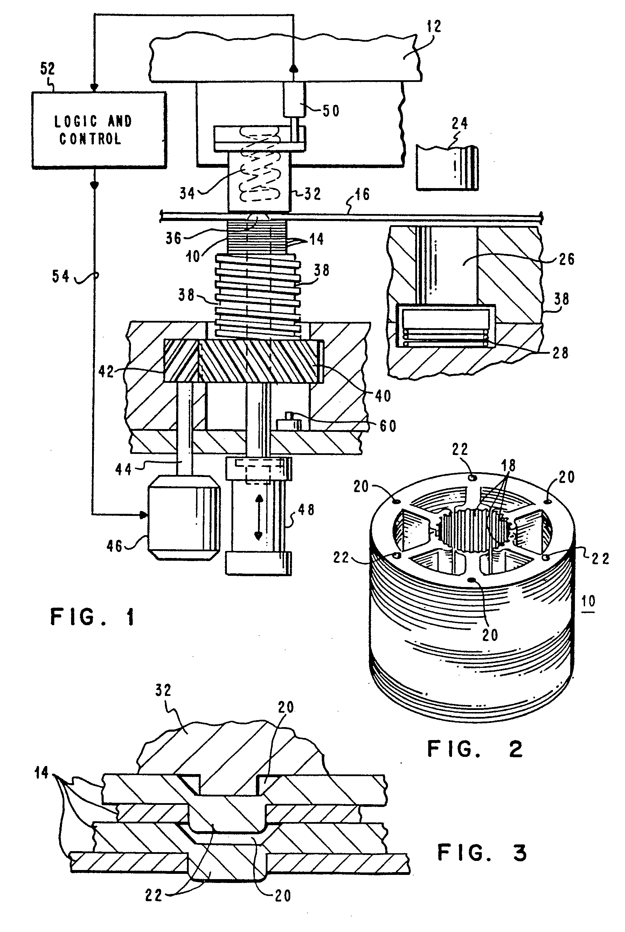

In an exemplary embodiment of my invention as illustrated in Fig. 1, a laminated dynamoelectric structure generally designated 10, may be formed to comprise the stator of a high speed stepper motor or the like. Each component lamina 14 of structure 10 is formed from a strip 16 of sheet metal stock in an improved apparatus 12 which includes a plurality of forming stations (not shown) and may be referred to as a progressive die.

Structure 10 can be seen more clearly in Fig. 2. Each lamina 14 includes six pole piece portions 18 arranged about 60° apart. At the base of each pole piece 18 there is either an opening or hole 20 or correspondingly sized nipple or protrusions 22. Parts of these design characteristics are blanked into each lamina 14 as it progresses through various stations in progressive die apparatus 12 in a conventional manner.

The penultimate station in apparatus 12 is a punch through station. A laminate 14, with its entire design blanked, is punched through from stock strip 16 by punch 24 against pressure pad 26 which is upwardly biased by spring 28 in die block 38. Spring loaded pressure pad 26 is provided for the purpose of returning a completed lamina 14 to stock strip 16 where lamina 14 is retained in a friction fit. In this manner stock strip 16 becomes a carrier for transporting a lamina 14 to the final station in progressive die apparatus 12.

It is at this operating station that laminated stack structure 10 is constructed. Knock out clinch punch 32 is urged by spring 34 toward keyed arbor 36. Punch 32 is provided to punch a given lamina 14 through stock strip 16 and position it on stack structure 10. Stack 10 is supported about keyed arbor 36 by screw 38 which is movably mounted on keyed arbor 36 for rotation therewith.

Means for rotating arbor 36 includes gear 40 which is driven by gear 42. Gear 42 is fixedly mounted on output shaft 44 of stepper motor 46. The gear ratio is such that each intermittent output of stepper motor 46 results in a 60° rotation of arbor 36 and therefore stack structure 10.

The amount of rotation desired obviously is a function of the opening 20 and nipple 22 (Fig. 2) spacing chosen. In my exemplary embodiment, there are altogether six holes and nipples evenly spaced around a lamina 14. Thus 60° is chosen for rotation of arbor 36 between receipt of individual lamina 14. Accompanying this rotation is a lowering of support screw 38 by a distance equal in thickness to that of an individual lamina 14. Keyed arbor 36 is also operatively engaged with air cylinder 48 for facilitating operator removal of a completed stack structure 10.

Sensor 50 is provided to detect the downstroke of punch 32. A signal indicative of detecting this position is fed to logic and control circuitry 52. Circuitry 52 is conventional and forms no part of this invention and may be implemented by those skilled in the art to perform the function I have indicated. Developed in circuitry 52 is a signal on line 54 to actuate stepper motor 46 for driving gear 42.

Sensor 60 is provided to develop a signal indicative of a predetermined height being reached by laminated stack structure 10. In response to the signal developed by sensor 60 downward motion of punch 32 is stopped and air cylinder 48 is activated to completely lower arbor 36 enabling stack 10 to be removed from apparatus 12 by means not shown.

Fig. 3 shows in cross-section holes 20 and protrusions 22 formed in laminae 14 interlocked by a simple press fit accomplished by appropriately shaped clinch punch 32. The joints so formed are sufficiently resistant to separation to allow structure 10 to be handled and transferred to subsequent operating stations without danger of destruction. There is thus obtained a savings in cost in man and machine terms due to the elimination of separate intermediate clamping means.

The improved apparatus operates as an addition to a progressive die with a plurality of operating stations at which any chosen design features are formed in sheet metal stack from which it is desired to make laminae to be assembled into dynamoelectric structures. In the preferred embodiment the invention is embodied in apparatus for manufacturing stators. Obviously the same features and advantages heretofore set out apply equally to the manufacture of rotor structures.

Operation of the invention

Referring once again to Fig. 1, a brief description of the operation of my invention will be given. Sheet stock 16 has formed therein at various unshown, but conventional, stations in apparatus 12 design features chosen for a particular application. In this instance pole pieces, teeth, and interlockable holes 20 and projections 22 (Fig. 2) are blanked for laminae 14. The sheet stock 16 is advanced to a position beneath punch 24 so that an individual lamina 14 is aligned properly therebeneath. An individual lamina is punched from, but returned to, sheet stock 16 by the combined action of punch 24 and spring biased pressure pad 26. Thus sheet stock 16 becomes a carrier for transporting the totally formed lamina 14 to the final station in apparatus 12. There, as earlier described, a lamina 14 is punched out from sheet stock 16 for the second time. Alignment arbor 36 receives lamina 14, and rotates a predetermined distance so that holes 20 and protrusions 22 of the first deposited lamina 14 will be in interlocking positions relative to the next received lamina.

Rotation of arbor 36 also lowers arbor 36 by an amount substantially equal to lamina thickness.

The punch, return, punch, stack, sequence is repeated until a predetermined height is attained by the laminae 14 as indicated by signals developed by appropriate sensors 50 and 60. At that point air cylinder 48 lowers a completely formed and interlocked stack of lamina a sufficient amount to allow removal thereof from the apparatus 12 by hand or other means.

What has been shown and described is an efficient and less costly technique for manufacturing uniform laminated structure.

The invention has been particularly shown and described with reference to a preferred embodiment, it will, of course, be understood by those skilled in the dynamoelectric laminated structure art that various changes in form and detail may be made without departing from the scope of the claims.

Claims

1. A method of manufacturing laminated dynamoelectric machine structures from interlockable laminae (14) with apparatus including at least one forming station (24, 26) where interlocking means are formed in prospective laminae on a sheet stock (16) and one stacking station (32) where the successive laminae are stacked, characterised in that it comprises:

a) advancing past a stock punch (24) said sheet of stock (16) in which said interlocking means have been formed as holes (20) and protrusions (22) regularly spaced on those parts of the sheet stock (16) which are later to become laminae (14);

b) punching a lamina, including its corresponding interlocking means, from said stock and returning said lamina to said stock;

c) advancing said lamina in said stock to said stacking station (32) which comprises an alignment arbor (36);

d) dislodging said lamina from said stock and forcing said lamina onto said arbor (36) against any previous lamina (14) forced on said arbor (36) to lock said laminae together; and

e) rotating said arbor (36) so that the protrusions (22) of the most recently stacked lamina are in registration with the holes (20) in the next lamina to come.

2. A method according to claim 1 characterized in that it further comprises the step of lowering said arbor (36) a predetermined distance equal to the thickness of the sheet stock (16) prior to accepting another lamina.

3. An apparatus for manufacturing laminated dynamoelectric machine structures from interlockable laminae (14) including at least one forming station where interlockable means are formed in prospective laminae on a sheet stock (16) and one stacking station (32) where the successive laminae are stacked, characterised by a punching station (24) for punching a formed lamina from said stock, and in that the punching station includes means (26) for returning said lamina to said stock,

and in that said apparatus further comprises a stacking station (34) including:
means (36) for receiving a plurality of laminae (14);
means (32) for dislodging said lamina from said stock;
means (32) for stacking said lamina on said receiving means (36);
means (38, 40, 42, 44, 46) for indexing said receiving means before receiving another lamina so as to align said interlockable means in adjacent lamina;
means (38, 40, 42, 44, 46) coacting with said indexing means for lowering said receiving means by a distance substantially equal to the thickness of the lamina; and
means (32) for locking said interlockable means.

4. The apparatus of claims 3 characterized in that said locking means are pressure exerting means (32).

## Revendications

1. Procédé de fabrication d'une structure feuilletée de machine dynamoélectrique à partir de laminations interverrouillables (14) à l'aide d'un appareil comprenant au moins une station de formation (24, 26) où sont formés des moyens d'interverrouillage dans des laminations à fabriquer dans une tôle à usiner (16) et une station d'empilage (32) où sont empilées les laminations successives, caractérisé en ce qu'il comprend:

a) l'avancement sur un dispositif de découpage de tôle (24) de ladite tôle à usiner (16) dans laquelle ont été formés lesdits moyens d'interverrouillage sous forme de trous (20) et de tétons (22) régulièrement espacés sur les portions de la tôle à usiner (16) qui doivent ultérieurement devenir les laminations (14);

b) le découpage d'une lamination, comprenant ses moyens d'interverrouillage correspondants, dans ladite tôle et le retour de ladite lamination dans ladite tôle;

c) l'avancement de ladite lamination dans ladite tôle à ladite station d'empilage (32) qui comporte un mandrin d'alignement (36);

d) le délogement de ladite lamination de ladite tôle et l'application de ladite lamination sur ledit mandrin (36) pour venir s'appuyer contre toute lamination précédente (14) appliquée sur ledit mandrin (36) afin de verrouiller ensemble lesdites laminations; et

e) la rotation dudit mandrin (36) de sorte que les tétons (22) de la lamination dernièrement empilée soient alignés avec les trous (20) de la lamination suivante.

2. Procédé selon la revendication 1, caractérisé en ce que il comprend en outre l'étape qui consiste à abaisser ledit mandrin (36) sur une distance prédéterminée égale à l'épaisseur de la tôle à usiner (16) avant d'accepter une autre lamination.

3. Appareil de fabrication d'une structure feuilletée de machine dynamoélectrique à partir de laminations interverrouillables (14) comprenant au moins une station de formation où sont formés des moyens d'interverrouillage dans des laminations à fabriquer dans une tôle à usiner (16), et une station d'empilage (32) où sont empilées les laminations successives, caractérisé par une station de découpage (24) pour découper une lamination formée dans ladite tôle, et en ce que la station de découpage comprend des moyens (26) pour retourner ladite lamination dans ladite tôle à usiner,

et en ce que ledit appareil comprend en outre une station d'empilage (34) comprenant:

des moyens (36) pour recevoir plusieurs laminations (14);

des moyens (32) pour déloger ladite lamination de ladite tôle;

des moyens (32) pour empiler ladite lamination sur lesdits moyens de réception (36);

des moyens (38, 40, 42, 44, 46) pour guider lesdites moyens de réception avant de recevoir une autre lamination de manière à aligner lesdits moyens d'interverrouilage dans la lamination adjacente;

des moyens (38, 40, 42, 44, 46) agissant avec lesdits moyens de guidage pour abaisser lesdits moyens de réception sur une distance sensiblement égale à l'épaisseur de la lamination, et

des moyens (32) pour bloquer lesdits moyens d'interverrouillage.

4. Appareil selon la revendication 3, caractérisé en ce que lesdit moyens de blocage sont des moyens exerçant une pression (32).

**Patentansprüche**

1. Verfahren zur Herstellung geschichteter dynamoelektrischer Maschinenstrukturen aus gegenseitig verblockbaren Schichten (14) mit einer Vorrichtung, die zumindest eine Bearbeitungsstation (24, 26), wo die Mittel zur gegenseitigen Verblockung innerhalb der zukuenftigen Schichten auf einem Blech-Werkstueck (16) ausgebildet sind, und eine Stapelstation (32) aufweist, wo die aufeinanderfolgenden Schichten gestapelt sind, dadurch gekennzeichnet, dass es folgende Schritte aufweist:

a) Vorschub des Blech-Werkstueckes (16) vor einer Stanzanlage (24), wo die Mittel zur gegenseitigen Verblockung als Hoehle (20) und Vorspruengen (22) mit gleichmaessigem Teilungsabstand in denjenigen Teilen des Blech-Werkstueckes (16) bearbeitet worden sind, die die zukuenftigen Schichten (14) sind,

b) Ausstanzen einer Schicht einschliesslich ihrer entsprechenden Mittel zur gegenseitigen Verblockung aus dem Werkstueck und Wieder-Anbringen der Schicht in dem Werkstueck,

c) Vorschub der Schicht in dem Werkstueck bis zu der Stapelstation (32), die einen Ausrichtdorn (36) aufweist,

d) Entfernung der Schicht von dem Werkstueck und Zwangsfuehrung der Schicht auf dem Ausrichtdorn (36) zur Zusammenverblockung der Schichten, und

e) Drehung des Ausrichtdornes (36), so dass die Vorspruenge (22) in der letzten gestapelten Schicht mit den Hoehlen (20) der naechsten Schicht ausgerichtet werden.

2. Verfahren nach Anspruch 1, dadurch gekennzeichnet, dass es auch den Schritt aufweist, der daraus besteht, den Ausrichtdorn (36) jenach einem vorbestimmten der Dicke des Blech-Werkstueckes (16) entsprechenden Abstand zu senken, ehe sie eine weitere Schicht erhaelt.

3. Vorrichtung zur Herstellung geschichteter dynamoelektrischer Maschinenstrukturen aus gegenseitig verblockbaren Schichten (14) mit zumindest einer Bearbeitungsstation, wo die Mittel zur gegenseitigen Verblockung innerhalb zukuenftiger Schichten auf einem Blech-Werkstueck (16) ausgebildet sind, und eine Stapelstation (32) aufweist, wo die aufeinanderfolgenden Schichten gestapelt sind, durch eine Stanzsanlage (24) zum Stanzen einer bearbeiteten Schicht aus dem Bleck-Werkstueck gekennzeichnet, dadurch, dass die Stanzanlage Mittel (26) einschliesst, um die Schicht in dem Werkstueck wieder anzubringen,

und auch dadurch,
dass die Vorrichtung weiterhin eine Stapelstation (34) aufweist, die folgendes einschliesst:

Mittel (36) zur Aufnahme einer Vielfalt von Schichten (14);

Mittel (32) zur Entfernung der Schicht von dem Werkstueck;

Mittel (32) zum Stapeln der Schicht auf den Aufnahme-Mitteln (36),

Mittel (38, 40, 42, 44, 46) zum Schalten der Aufnahme-Mittel vor dem Erhalt einer weiteren Schicht, um die Mittel zur gegenseitigen Verblockung mit der anliegenden Schicht auszurichten;

Mittel (38, 40, 42, 44, 46) zum Zusammenwirken mit den Schaltmitteln zum Senken der Aufnahme-Mittel jenach einem im wesentlichen der Dicke der Schicht entsprechenden Abstand, und

Mittel (32) zu Verriegeln der Mittel zur gegenseitigen Verblockung einschliesst.

4. Vorrichtung nach Anspruch 3, dadurch gekennzeichnet, dass die Verriegelungsmittel Druckmittel (32) sind.

FIG. 1

FIG. 2

FIG. 3